# EUROPÄISCHE PATENTANMELDUNG

(11) **EP 0 709 553 A1**
(43) Veröffentlichungstag der Anmeldung: **01.05.1996**
(21) Anmeldenummer: 95116703.0
(22) Anmeldetag: 24.10.1995
(51) Int. Cl.: F01M 1/10, B01D 27/10, B01D 36/04

(54) **Schmierölsystem einer Brennkraftmaschine**

(30) Priorität: 29.10.1994 DE 4438679
(71) Anmelder: AUDI AG, D-85045 Ingolstadt (DE)
(72) Erfinder: Huber, Karl, D-85072 Eichstätt (DE)

(57) **Zusammenfassung**

Die Erfindung betrifft ein Schmierölsystem einer Brennkraftmaschine, mit einer aus einem Sumpf (10) fördernden Pumpe (12), die ein Schmierstellen (14) versorgendes Hauptstromsystem und ggf. ein Nebenstromsystem mit unter Druck stehendem Schmieröl versorgt, wobei im Hauptstrom zwei hintereinandergeschaltete Spalt-, Sinter- oder Siebfilter (20a,20b) angeordnet sind, von denen zumindest der eine Filter (20a,20b) über ein druckabhängig öffnendes Bypassventil (48,49) strömungstechnisch kurzschließbar ist. Ferner kann im Nebenstromsystem eine Freistrahl-Zentrifuge zur zusätzlichen Schmierölreinigung angeordnet sein.

## Beschreibung

Die Erfindung betrifft ein Schmierölsystem einer Brennkraftmaschine, gemäß dem Oberbegriff des Patentanspruches 1.

In herkömmlichen Schmierölsystemen von Brennkraftmaschinen werden Wechselfilter verwendet, die zumeist in einem trommelförmigen Gehäuse befindliche Papierfilter sind. Das Wechselintervall ist durch die Haltbarkeit des Filters bestimmt und liegt in der Regel zwischen 10 000 bis 30 000 Kilometer, je nach Belastung der Brennkraftmaschine.

Aufgabe der Erfindung ist es, ein Schmierölsystem der gattungsgemäßen Art vorzuschlagen, welches eine weit längere Standzeit des Schmierölfilters, ggf. sogar eine der Lebensdauer der Brennkraftmaschine entsprechende Standzeit ergibt.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar. Besonders vorteilhaft kann das Schmierölsystem noch ein Nebenstromsystem aufweisen, in dem eine Zentrifuge, insbesondere eine Freistrahl-Zentrifuge, als weiterer Schmierölreiniger vorgesehen ist.

Erfindungsgemäß werden zwei hintereinander geschaltete Spalt-, Sinter- oder Siebfilter aus Kunststoff oder Metall vorgeschlagen, von denen ein Filter über ein druckabhängig öffnendes Bypassventil kurzschließbar ist.

Es hat sich gezeigt, daß derartige Filter mechanisch unempfindlich sind und deshalb in ihrer Filterleistung über eine lange Standzeit unverändert bleiben. Durch die Hintereinanderschaltung zweier Filter und der Veränderung zumindest eines Bypassventils ist ferner eine Redundanz der Schmierölfilterung gegeben, die bei Nachlassen der Filterleistung des einen Filters vermehrt den zweiten Filter einschaltet, wodurch sowohl die Filterleistung als auch der Schmieröldurchsatz durch den Filter weitgehend unverändert bleiben. Ein Wechsel des Schmierölfilters ist nicht oder nur nach einer sehr langen Standzeit von z. B. 100 000 Kilometer erforderlich.

Bevorzugt können die beiden Filter in einem einheitlichen Filtergehäuse angeordnet sein. Ferner ist es vorteilhaft, wenn der stromab liegende Filter eine geringere Maschenweite aufweist, also ein Feinfilter ist, während der stromauf liegende Filter mit einer größeren Maschenweite versehen ist. Ferner sollen die beiden Filter im wesentlichen eine gleiche wirksame Filteroberfläche aufweisen, um eine ausreichende Filterleistung sowohl bei Durchströmen beider Filter als auch nach Kurzschluß des einen Filters durch den zweiten Filter zu gewährleisten.

Für hochbelastete Maschinen kann in vorteilhafter Weiterbildung der Erfindung mit einfachen Mitteln eine Kühlung des Schmieröles bewirkt werden, in dem das Filtergehäuse für die beiden Filter doppelwandig ausgebildet und von einem Kühlmedium, insbesondere dem Kühlwasser der Brennkraftmaschine, durchströmbar ist. Durch entsprechende Gestaltung des Filtergehäuses können dabei Kühlrippen gebildet werden, die eine gezielte Druchströmung des Filtergehäuses z. B. im Gegenstromprinzip ergeben.

Ferner kann bei hochbelasteten Brennkraftmaschinen mit ggf. hohem spezifischen Schmieröldurchsatz im Nebenstrom des Schmierölsystems eine Zentrifuge, insbesondere eine Freistrahl-Zentrifuge, vorgesehen sein, mittels der insbesondere feine Schmutzpartikel wie Abrieb und Verbrennungsrückstände aus dem Schmieröl herausgefiltert werden. Es versteht sich, daß dadurch eine wesentlich bessere, die Standzeit des Schmierölfilters im Hauptstromsystem verlängernde Schmierölreinigung erzielbar ist. Insbesondere mit dieser Kombination ist es möglich, die Brennkraftmaschine über ihre gesamte Laufzeit ohne Wechsel eines Schmierölfilters auszubilden.

Ein Ausführungsbeispiel der Erfindung ist im folgenden mit weiteren Einzelheiten näher erläutert. Die schematische Zeichnung zeigt in
- Fig. 1: ein Blockschaltbild eines Schmierölsystems einer Brennkraftmaschine mit einem zweistufigen Schmieröl-Siebfilter im Hauptstromsystem;
- Fig. 2: den zweistufigen Siebfilter gemäß Fig. 1 in einem Längsmittelschnitt; und
- Fig 3: einen Abschnitt des zweistufigen Siebfilters in raumbildlicher Darstellung.

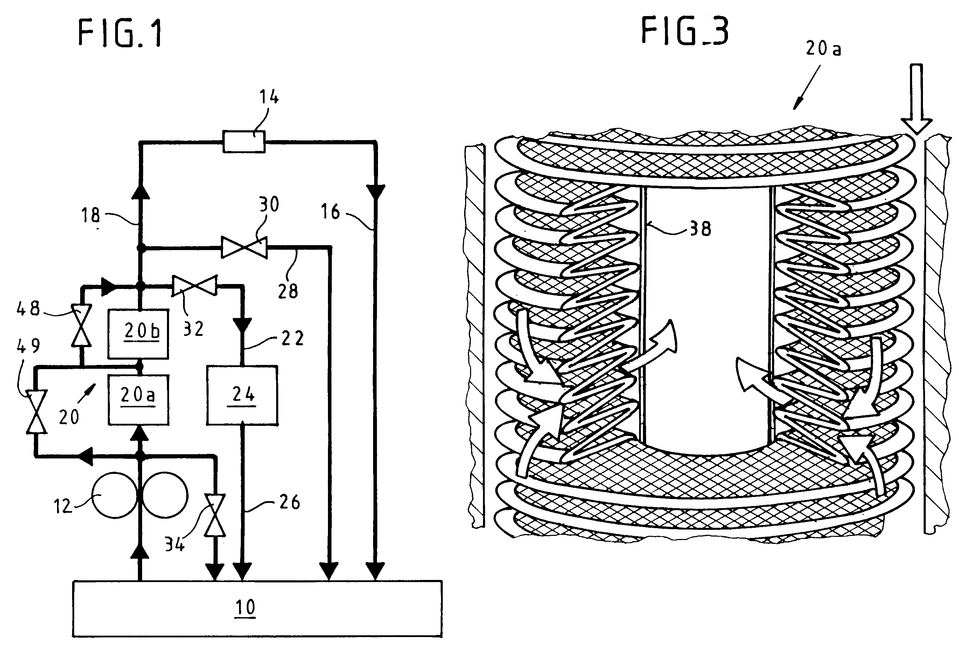

Das in der Fig. 1 gezeigte Schmierölsystem einer nicht dargestellten Hubkolben-Brennkraftmaschine weist einen Schmieröl-Sumpf 10 auf, aus dem eine Zahnradpumpe 12 in herkömmlicher Weise Schmieröl ansaugt und dieses unter Druck zu den Schmierstellen 14 (z. B. Kurbelwellen- und Nockenwellenlager) fördert. Aus diesen Lagern kann das Schmieröl wieder drucklos zum Sumpf zurückfließen (angedeutet mit der Rücklaufleitung 16).

In die von der Pumpe 12 abgehende Druckleitung 18 ist ein Schmierölfilter 20 eingeschaltet, der sich aus zwei hintereinander geschalteten Siebfiltern 20a,20b, bevorzugt aus Metall, zusammensetzt.

Stromab des Schmierölfilters 20 zweigt von der Druckleitung 18 eine erste Leitung 22 ab, die als Teil eines Nebenstromsystems des gesamten Schmierölsystems zu einer z. B. in der Ölwanne der Brennkraftmaschine oder außerhalb dieser liegenden Freistrahl-Zentrifuge 24 führt. Von der Zentrifuge 24 kann das Schmieröl über die Rücklaufleitung 26 wieder in den Schmierölsumpf 10 zurückfließen.

Ferner ist stromab des Schmierölfilters 20 an der Druckleitung 18 eine weitere Leitung 28 angeschlossen, in die ein Überdruckventil 30 eingeschaltet ist und über die überschüssiges Schmieröl in den Schmierölsumpf 10 abgeleitet wird.

Das im Hauptstrom umlaufende Schmieröl wird demgemäß über die Druckleitung 18 durch den Schmierölfilter 20 hindurch zu den Schmierstellen 14 der Brennkraftmaschine gefördert.

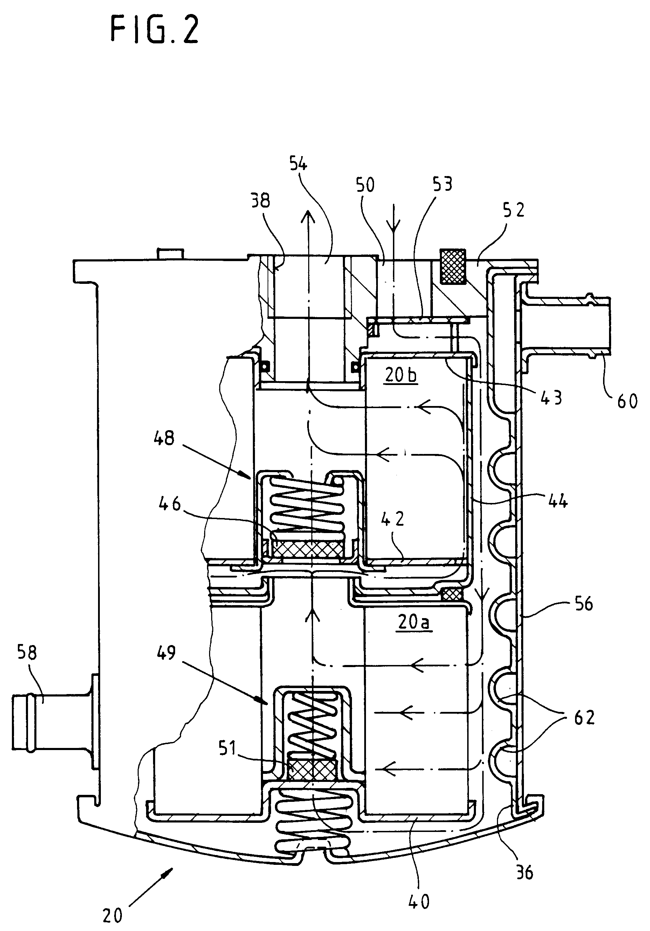

Gemäß den Fig. 2 und 3 weist der Schmierölfilter 20 ein im wesentlichen zylindrisches, einseitig geschlossenes Filtergehäuse 36 auf, in dem die beiden hintereinandergeschalteten Siebfilter 20a und 20b angeordnet sind. Die Siebfilter 20a,20b (vgl. Fig. 3) sind zur Vergrößerung ihrer wirksamen Filteroberfläche balgförmig (ggf. auch sternförmig) gefaltet und ringförmig angeordnet. Zwischen den beiden Siebfiltern 20a und 20b sowie außerhalb des stromab liegenden Siebfilters 20b sind Trennwände 42,43,44 vorgesehen, die eine Durchströmung der beiden Siebfilter entsprechend den eingezeichneten Pfeilen ermöglicht. Ferner ist in dem innerhalb der Filter 20a,20b gebildetem Kanal 38 ein erstes Bypassventil 48 angeordnet, dessen bewegliche, federbelastete Ventilplatte 46 einen strömungsmäßigen Kurzschluß des stromab liegenden Siebfilters 20b bei einem Differenzdruck von 0,5 bar stromauf und stromab des Bypassventiles 48 ermöglicht.

Ferner ist stromauf des Filters 20a in einer radial verlaufenden Trennwand 40 ein zweites Bypassventil 49 mit einer federbelasteten, beweglichen Ventilplatte 51 vorgesehen, das mit einem höher eingestelltem Differenzdruck als Überdruckventil und zum Kurzschließen zumindest des stromauf liegenden Filters 20a, in der Regel aber auch des Filters 20b, dient.

Entsprechend den eingezeichneten Pfeilen strömt das unter Druck geförderte Schmieröl aus der Druckleitung 18 über radial außerhalb des Kanales 38 liegende Einströmöffnungen 50 einer im Filtergehäuse 36 befestigten Montageplatte 52 in den Schmierölfilter ein, strömt dann entlang den Trennwänden 43,44 an dem Siebfilter 20b vorbei und durch den Siebfilter 20a hindurch, dann aufgrund der Trennwand 42 innerhalb der Trennwände 44,43 durch den zweiten funktional dahinter liegenden Siebfilter 20b in den oberen Abschnitt des Kanales 38 und von diesem über die zentrale Abströmöffnung 54 in der Montageplatte 52 den Schmierstellen der Brennkraftmaschine zu. Dabei weisen die beiden Siebfilter 20a,20b im wesentlichen die gleiche wirksame Filteroberfläche auf, während deren Maschenweiten unterschiedlich sind; so ist der stromauf liegende Siebfilter 20a mit einer Maschenweite von 60 µ und der stromab liegende Siebfilter 20b mit einer Maschenweite von 30 µ versehen.

Sollte der Differenzdruck stromauf und stromab des Bypassventiles 48 0,5 bar übersteigen, so öffnet das Bypassventil 48 und das unter Druck stehende Schmieröl wird unter zunehmender Kurzschließung des stromab liegenden Siebfilters 20b entsprechend den eingezeichneten Pfeilen nur durch den stromauf liegenden Siebfilter 20a gefördert.

Ist die Druckdifferenz beider Filter 20a und 20b > 5 bar, so öffnet zunächst das Bypassventil 49 und danach das Bypassventil 48, so daß das Schmieröl zur Vermeidung eines unzulässigen Überdrucks ohne Durchströmung der Filter 20a,20b durch den Kanal 38 abströmen kann.

In der Montageplatte 52 ist zudem ein Rückschlagventil 53 an den Einströmöffnungen 50 vorgesehen, über welches ein Leerlaufen des Schmierölfilters vermieden ist.

Um das Filtergehäuse 36 herum ist eine weitere Umfangswand 56 abgedichtet vorgesehen, die einen Kühlmittel-Einlaßstutzen 58 und einen Kühlmittel-Auslaßstutzen 60 aufweist. Das Filtergehäuse 36 ist im Umfangsbereich mit schraubenförmig umlaufenden Kühlrippen 62 versehen, die bei einem Einströmen des Kühlwassers beispielsweise von der Brennkraftmaschine in den Einlaß 58 ein schraubenförmiges Umlaufen des Kühlmittels unter intensiver Kühlung des Schmieröles im Schmierölfilter 20 bis zum Kühlmittel-Auslaßstutzen 60 ermöglichen. Die Durchströmung des Kühlmittels ist dabei im Gegenstromprinzip, d. h., daß die axiale Richtung der Kühlmittelströmung der durch die Pfeile eingezeichenten Schmierölströmung entgegengesetzt ist.

Das im Hauptstrom umlaufende Schmieröl wird demgemäß über die Druckleitung 18 durch das Schmierölfilter 20 hindurch zu den Schmierstellen 14 der Brennkraftmaschine gefördert, wobei ggf. überschüssiges Schmieröl über die Überdruckventile 30 oder 34 abströmt. Grobe und feinere Schmutzpartikel werden dabei vom Schmierölfilter bzw. von dem feineren und gröberen Siebfiltern 20a,20b zurückgehalten.

Gleichzeitig wird im Nebenstrom über die Freistrahl-Zentrifuge 24 (z. B. Zentrifuge unter der Handelsbezeichnung GF 025 der Firma Glacier) ständig das Schmieröl gereinigt bzw. es werden Verbrennungsrückstände und extrem feiner Abrieb aus den Lagerstellen der Brennkraftmaschine aus dem Schmieröl ausgeschieden. Der Antrieb der Zentrifuge 24 erfolgt in an sich bekannter Weise nach dem Rückstoßprinzip über an der drehbaren Trommel der Zentrifuge 24 angeordnete Reaktionsdüsen, an denen das unter Druck stehende Schmieröl austritt. Es kann jedoch auch eine mechanisch angetriebene Zentrifuge verwendet sein.

Stromauf der Zentrifuge 24 ist in die Leitung 22 ein Überdruckventil 32 eingeschaltet, welches bei einem niedrigeren Druck als dem des Überdruckventiles 30 öffnet, so daß das gesamte von der Pumpe 12 geförderte Schmieröl unterhalb der eingestellten Druckschwelle über die Schmierstellen 14 geführt wird. Damit ist eine sichere Schmierung auch bei niedrigem Druckniveau (z. B. im Leerlauf bei hohen Schmieröltemperaturen) gewährleistet.

Sollte nach einer langen Standzeit des Schmierölfilters 20 im Hauptstromsystem der Durchsatz des stromab liegenden Siebfilters 20b aufgrund abgesetzer Verunreinigungen vermindert sein, so bildet sich an dem Bypassventil 48 stromab und stromauf der beweglichen Ventilplatte 46 ein Differenzdruck aus, der bei z. B. 0,5 bar ein Öffnen der federnd vorgespannten Ventilplatte 46 bewirkt. Dadurch strömt Schmieröl über den Kanal 38 unter Umgehung des Siebfilters 20b direkt ab, so daß der erforderliche Durchsatz des Schmierölfilters 20 nur über den Siebfilter 20a erhalten bleibt.

Ggf. könnte das Öffnen des Bypassventiles 48 mittels angeordneter, elektrischer Kontakte über einen Überwachungstromkreis erfaßt und damit ein erforderlicher Filterwechsel angezeigt werden.

Anstelle der dargestellten Siebfilter 20a,20b, könnten auch aus entsprechend porösem Sintermetall hergestellte Filterblöcke oder hinterandergeschaltete Spaltfilter verwendet sein. Ferner könnten die Filter auch aus einem geeigneten Kunststoffmaterial hergestellt sein, welches die für die angestrebte lange Filterstandzeit erforderliche mechanische und chemische Festigkeit aufweist.

Abweichend von dem beschriebenen Ausführungsbeispiel könnte auch nur das Bypassventil 48 vorgesehen sein, welches einen Filter 20a oder 20b kurzschließt. Insbesondere bei Filter mit gleicher Maschenweite könnte auch der stromauf liegende Filter 20a kurzgeschlossen werden, wenn das Bypassventil 48 räumlich an die Stelle des Bypassventiles 49 gelegt würde. Abhängig davon, ob die Stelle des dargestellten Bypassventiles 48 geschlossen oder offen ausgebildet wäre, könnte dann nur der stromauf liegende Filter 20a oder beide Filter 20a und 20b kurzschließbar sein.

## Patentansprüche

1. Schmierölsystem einer Brennkraftmaschine, mit einer aus einem Sumpf fördernden Pumpe, die ein Schmierstellen versorgendes Hauptstromsystem mit unter Druck stehendem Schmieröl versorgt und einem im Hauptstromsystem angeordnetem Schmierölfilter, dadurch gekennzeichnet, daß der Schmierölfilter (20) durch zwei hintereinander geschaltete Spalt-, Sinter- oder Siebfilter (20a,20b) gebildet ist, von denen zumindest ein Filter (20a,20b) über ein druckabhängig öffnendes Bypassventil (48,49) kurzschließbar ist.

2. Schmierölsystem nach Anspruch 1, dadurch gekennzeichnet, daß die beiden Filter (20a,20b) über je ein vorgeschaltetes Bypassventil (48,49) kurzschließbar sind.

3. Schmierölsystem nach den Ansprüchen 1 und 2, dadurch gekennzeichnet, daß Filter (20a,20b) und Bypassventile (48,49) in einem gemeinsamen Filtergehäuse (36) angeordnet sind.

4. Schmierölsystem nach den Ansprüchen 1 - 3, dadurch gekennzeichnet, daß die beiden Filter (20a,20b) balgartig gefaltete, ringförmige Siebfilter sind, die koaxial angeordnet durch Trennwände (42,43,44) strömungstechnisch hintereinander geschaltet sind.

5. Schmierölsystem nach den Ansprüchen 1 - 4, dadurch gekennzeichnet, daß die beiden Filter (20a,20b) mit unterschiedlichen Maschenweiten ausgeführt sind.

6. Schmierölsystem nach Anspruch 5, dadurch gekennzeichnet, daß der stromab liegende Filter (20b) eine geringere Maschenweite aufweist.

7. Schmierölsystem nach den Ansprüchen 5 und 6, dadurch gekennzeichent, daß die Maschenweite des stromauf liegenden Filters (20a) zwischen 45 µ und 80 µ, insbesondere 60 µ, und die Maschenweite des stromab liegenden Filters (20b) zwischen 15 µ und 45 µ, insbesondere 30 µ, beträgt.

8. Schmierölsystem nach einem oder mehreren der vorhergehenden Ansprüche, dadurch gekennzeichnet, daß die wirksame Filteroberfläche der beiden Filter (20a,20b) ungefähr gleich groß ist.

9. Schmierölsystem nach einem oder mehreren der vorhergehenden Ansprüche, dadurch gekennzeichnet, daß der Öffnungsdruck des den einen Filter (20b) kurzschließenden Bypassventiles (48) auf ca. 0,5 bar eingestellt ist.

10. Schmierölsystem nach einem oder mehreren der vorhergehenden Ansprüche, dadurch gekennzeichnet, daß das stromauf liegende Bypassventil (49) als Überdruckventil eingestellt ist.

11. Schmierölsystem nach einem oder mehreren der vorhergehenden Ansprüche, dadurch gekennzeichnet, daß das Filtergehäuse (36,56) doppelwandig ausgebildet und mit einem Kühlmedium durchströmbar ist.

12. Schmierölsystem nach Anspruch 11, dadurch gekennzeichent, daß bei einem zylindrischen Filtergehäuse (36) schraubenförmig verlaufende Kühlrippen (62) eingeformt sind, die das Kühlmedium schraubenförmig umlaufend von einem Kühlmittel-Einlaßstutzen (58) zu einem Kühlmittel-Auslaßstutzen (60) leiten.

13. Schmierölsystem nach einem oder mehreren der vorhergehenden Ansprüche, dadurch gekennzeichnet, daß ein Nebenstromsystem (22,26) vorgesehen ist, in dem eine Zentrifuge (24) als weiterer Schmierölreiniger vorgesehen ist.
